# EUROPÄISCHE PATENTANMELDUNG

(11) **EP 0 713 719 A2**
(43) Veröffentlichungstag der Anmeldung: **29.05.1996**
(21) Anmeldenummer: 95115491.3
(22) Anmeldetag: 30.09.1995
(51) Int. Cl.: B01D 17/00, B01D 61/14, C02F 1/44, B01D 61/16, B01D 61/22

(54) **Entsorgungsvorrichtung zur Abscheidung von Öl aus Schmutzwasser**

(30) Priorität: 25.11.1994 DE 4441970
(71) Anmelder: Herm. J. Hellmers GmbH, D-22113 Hamburg (DE)
(72) Erfinder: Harder, Michael, D-21037 Hamburg (DE)
(74) Vertreter: Niedmers, Ole, Dipl.-Phys.

(57) **Zusammenfassung**

Es wird eine Entsorgungsvorrichtung (10) zur Abscheidung von Öl aus Schmutzwasser (11) vorgeschlagen, umfassend wenigstens einen Sammelbehälter (14) für aus dem Schmutzwasser (11) erzeugtes Wasser (15) mit geringerem Reinheitsgrad, sowie einen Ölsammelbehälter (16), in dem das aus dem Schmutzwasser (11) in einem Sammelseparator (17) anfallende Öl (18) gesammelt wird. Das im Sammelbehälter (14) befindliche Wasser (15) mit geringerem Reinheitsgrad ist bei Überschreiten eines vorbestimmten Restölanteils über eine Membrantrenneinrichtung (19) führbar, wobei das die Membrantrenneinrichtung (19) verlassende Permeat (20) als Reinwasser sammelbar und/oder abführbar ist, wohingegen das die Membrantrenneinrichtung (19) verlassende Retentat (21) in einen Behälter (22) rückführbar ist.

## Beschreibung

Die Erfindung betrifft eine Entsorgungsvorrichtung zur Abscheidung von Öl aus Schmutzwasser, umfassend wenigstens einen Sammelbehälter für aus dem Schmutzwasser erzeugtes Wasser mit einem geringeren Reinheitsgrad, sowie einen Ölsammelbehälter, in dem das aus dem Schmutzwasser in einem Ölseparator anfallende Öl gesammelt wird.

Eine Entsorgungsvorrichtung dieser Art ist bekannt (DE-OS 42 08 506). Die bekannte Entsorgungsvorrichtung arbeitet mit großer Zuverlässigkeit und zur vollsten Zufriedenheit der Benutzer. Es hat sich jedoch herausgestellt, daß bei bestimmten zu entsorgenden Schmutzwassern das durch die Vorrichtung unter anderem erzeugte Reinwasser einen bestimmten Anteil an Emulsionen enthält, die entweder schon im zu entsorgenden Schmutzwasser vorhanden sind oder sich aber beim Förder- oder Saugvorgang des Schmutzwassers in der Vorrichtung bilden mit der Folge, daß das Wasser, das in der Vorrichtung aus dem Schmutzwasser erzeugt wird, einen geringeren Reinheitsgrad aufweist als erwünscht, so daß es nicht ohne weiteres an die Umwelt abgegeben werden kann.

Zwar ist es grundsätzlich möglich, dieses mit Emulsionen behaftete Wasser mit einem geringeren Reinheitsgrad chemisch zu behandeln, eine chemische Behandlung setzt regelmäßig aber eine längere Behandlung des mit Emulsionen behafteten Wassers mit einem geringeren Reinheitsgrad voraus, was zu einem Verlust an schneller Entsorgung von Schmutzwasser durch die Entsorgungsvorrichtung führt, wobei bekannt ist, daß eine Entsorgung von Schmutzwasser, insbesondere auch bei Unfällen, sehr schnell vonstatten gehen muß, um größere Schäden für die Umwelt bzw. Umgebung zu vermeiden. Desweiteren erhöht der Einsatz von Chemikalien zur Behandlung des emulsionenbehafteten Wassers in jenem Fall die zu entsorgende Abfallmenge, was dem Ziel zuwider läuft, im Zuge der Reinigung von Schmutzwasser nicht noch wieder neue, schwerer zu entsorgende Abfallkomponenten zu erzeugen. Hinzu kommt noch, daß auch die Bedienungspersonen derartiger Entsorgungsvorrichtungen die Entsorgung schnell, einfach und sicher durchführen können müssen, ohne daß es aufwendiger Analysen des Schmutzwassers und sich daraus gegebenenfalls ergebender Parameter für die Zugabe von chemischen Reinigungsmitteln bedarf.

Es ist somit Aufgabe der vorliegenden Erfindung, eine Entsorgungsvorrichtung der eingangs genannten Art zu schaffen, die in der Lage ist, auch Emulsionen aus ansonsten mit der Vorrichtung gereinigtem Wasser zu trennen, wobei keine chemischen Zusätze zur Behandlung des gereinigten Wasser herangezogen werden sollen, und daß der Reinigungsvorgang auch zur Erhöhung der Betriebssicherheit der Vorrichtung auch von nicht höher qualifizierten Personen sicher und auf einfache Weise durchgeführt werden kann, so daß das somit auch von Emulsionen befreite gereinigte Wasser bedenkenlos an die Umwelt abgegeben oder zu weiteren Reinigungszwecken, bei denen Reinwasser erforderlich ist, gesammelt werden kann.

Gelöst wird die Aufgabe gemäß der Erfindung dadurch, daß das im Sammelbehälter befindliche Wasser mit geringerem Reinheitsgrad bei Überschreitung eines vorbestimmten Restölanteils über eine Membrantrenneinrichtung führbar ist, wobei das die Membrantrenneinrichtung verlassende Permeat als Reinwasser sammelbar und/oder abführbar ist, wohingegen das die Membrantrenneinrichtung verlassende Retentat in einen Behälter rückführbar ist.

Der Vorteil der erfindungsgemäßen Vorrichtung besteht im wesentlichen darin, daß, wie angestrebt, auf sehr einfache Weise im mittels der Vorrichtung gereinigten Wasser befindliche Restölanteile, die beispielsweise in Form einer Öl-in-Wasser-Emulsion vorliegen, aus dem Wasser getrennt werden können, wenn ein vorbestimmbarer, sich nach allgemeinen Normen bzw. Richtlinien festliegender Wert überschritten wird, d.h. dann ohne weiteres das von der Vorrichtung erzeugte Wasser mit einem geringeren Reinheitsgrad an die Umwelt abgegeben werden kann. Ein weiterer Vorteil ist, daß über die Membraneinrichtung fortwährend in einem Kreisprozeß das aus dem Wasser mit einem geringeren Reinheitsgrad erzeugte Retentat (Konzentrat) erneut zusammen mit neu anfallendem Wasser mit einem geringeren Reinheitsgrad gemischt und erneut der Membrantrenneinrichtung zugeführt werden kann. Eingriffe durch die Bedienungspersonen zur Durchführung dieses Kreisprozesses sind nicht erforderlich, d. h., neben einer hohen Betriebssicherheit ist auch eine schnelle Reinigung des mit Emulsionen belasteten Wassers mit einem geringeren Reinheitsgrad möglich, so daß auch, wie angestrebt, tatsächlich eine schnelle Reinigung des Schmutzwassers im Bedarfsfall möglich ist.

Gemäß einer vorteilhaften Ausgestaltung der Entsorgungsvorrichtung ist der Behälter der Sammelbehälter für das Wasser mit einem geringeren Reinheitsgrad, d.h. der vorbeschrieben mögliche Kreisprozeß der Abtrennung von Emulsionen ist somit ohne zusätzliche Maßnahmen bzw. Einrichtungen auf einfache Weise möglich.

In Abhängigkeit des Grades der Aufkonzentration des die Membrantrenneinrichtung verlassenden Retentats ist es vorteilhafterweise auch möglich, das Retentat direkt in den Ölsammelbehälter zu fördern, d.h. als Behälter den Ölsammelbehälter zu benutzen.

Um den Entsorgungsvorgang mittels der Vorrichtung weitgehend zu automatisieren, d.h. weitgehend unabhängig von gesonderter Einflußnahme durch die Bedienungsperson zu machen, was zu Fehlerquellen und zu einer Verminderung der Betriebssicherheit der Vorrichtung führen würde, ist es ebenfalls vorteilhaft, daß der Restölanteil des im Sammelbehälter befindlichen Wassers mit geringerem Reinheitsgrad mittels einer Analyseeinrichtung bestimmbar ist, die über eine Leitung mit dem Sammelbehälter und/oder dem Ausgang des Ölseperators verbunden ist. Die Analyseeinrichtung mit dazugehöriger Stelleinrichtung kann somit ermitteln und bestimmen, ob das vom Ölseparator kommende gereinigte Wasser einen derartigen Reinheitsgrad hat, so daß es unmittelbar an die Umwelt abgebbar ist oder als Reinwasser für Reinigungszwecke zur Verfügung steht, bei denen das Reinwasser einen hohen Reinheitsgrad haben muß, oder ob es noch in einem Maße mit Öl-in-Wasser-Teilen behaftet ist, daß es zuerst in den Sammelbehälter geführt wird und von dort auf die Membrantrenneinrichtung gegeben wird, um auch diese Ölanteile noch dem somit einen geringeren Reinheitsgrad aufweisenden Wasser zu entziehen.

Gemäß einer vorteilhaften Ausgestaltung der Vorrichtung ist das die Membrantrenneinrichtung verlassende Permeat in einem Reinwasserbehälter sammelbar, d.h. es wird nicht ohne weiteres an die Umgebung abgegeben. Vielmehr wird es im Reinwasserbehälter gesammelt, um einen Vorrat an Reinwasser zu bilden, mit dem unmittelbar am Ort der Entsorgung Reinigungsvorgänge durchgeführt werden können, für die emulsionsfreies Reinwasser erforderlich ist, was auch zumindest teilweise bedenkenlos in der Umgebung versickern kann.

Grundsätzlich sind alle vorbeschriebenen Komponenten der Entsorgungsvorrichtung in bezug auf ihre konstruktive Ausgestaltung und auch in bezug auf ihr bestimmungsgemäßes Zusammenwirken als Einzelkomponenten denkbar und aufbaubar. Insbesondere aber im Hinblick auf eine kompakt aufgebaute Entsorgungsvorrichtung, die zu Transport- und Wartungszwecken einfach handhabbar sein soll, ist es vorteilhaft, daß wenigstens der Sammelbehälter und/oder der Ölsammelbehälter in einem gemeinsamen Kessel angeordnet sind, wobei vorzugsweise auch der Reinwasserbehälter im Kessel angeordnet sein kann, wie dieses beispielsweise bei im wesentlichen kesselförmig ausgebildeten Entsorgungsvorrichtungen dieser Art auch schon praktiziert wird.

Im Hinblick auf eine unmittelbar vor Ort des Schmutzwasseranfalls durchführbare Entsorgung des Schmutzwassers und im Hinblick auf eine Restentsorgung des maximal aufkonzentrierten Retentats und des abgeschiedenen, gesammelten Öls ist es vorteilhaft, die Entsorgungsvorrichtung insgesamt mobil auszubilden, d.h. entweder auf einem Fahrzeug mit Eigenantrieb oder aber auf einem mittels eines Zugfahrzeugs gezogenen Anhängers.

Die Erfindung wird nun unter Bezugnahme auf die einzige schematische Zeichnung anhand eines Ausführungsbeispieles im einzelnen beschrieben. Diese zeigt:
In Form eines Blockschaltbildes den Aufbau und Zusammenwirken der einzelnen Komponenten der Entsorgungsvorrichtung, wobei die Behälterkomponenten der Entsorgungsvorrichtung in einem gemeinsamen Kessel angeordnet sind, unter Weglassung unwichtiger Details.

Die Entsorgungsvorrichtung 10 umfaßt im wesentlichen einen Kessel 13 an sich bekannten Aufbaus, wie er im allgemeinen bei Entsorgungsvorrichtungen 10 dieser Art, ob fahrbar oder nicht fahrbar, verwendet wird. Aus Vereinfachungsgründen sind Pumpen, Ventileinrichtungen und Fahrzeugkarosserie, auf dem die Entsorgungsvorrichtung 10 angeordnet sein kann, weggelassen worden. Der Kessel 13 umfaßt einen Sammelbehälter 14 für Wasser 15 mit im allgemeinen geringem Reinheitsgrad sowie einen Ölsammelbehälter 16 zur Aufnahme von Öl 18 aus einem Ölseperator 17 und einen Reinwasserbehälter 26. Der Sammelbehälter 14 sowie der Reinwasserbehälter 26 sind in bezug auf ihre jeweiligen Volumen durch innerhalb des Kessels 13 verschiebbare Trennwände 28 einstellbar, was hier im einzelnen aber nicht weiter erläuterungsbedürftig ist. Die Trennwände 28 können innerhalb des Kessels 13 auch fest angeordnet sein.

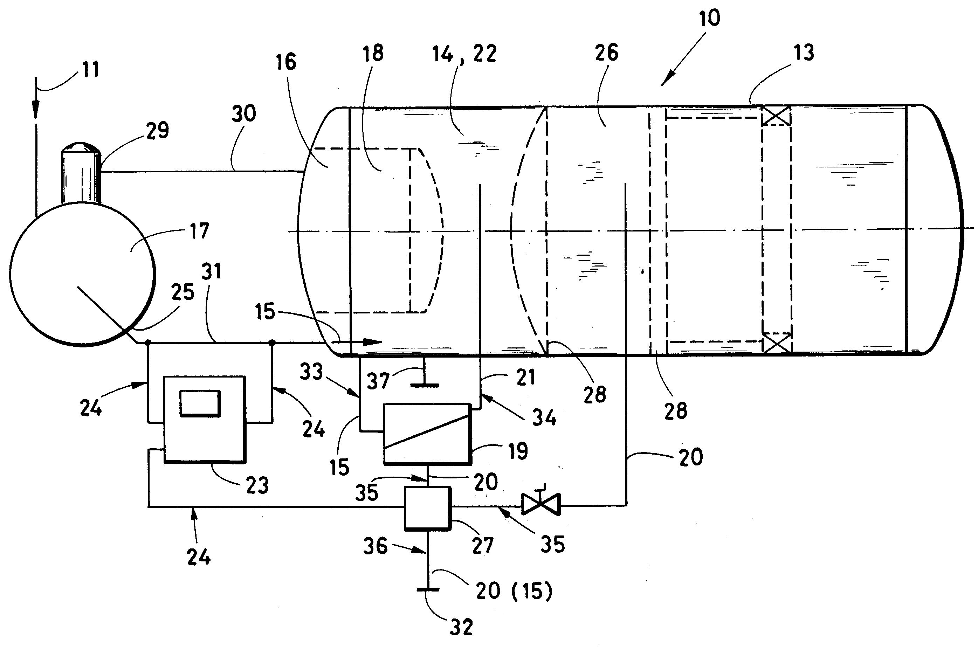

Bei der in der einzigen Figur dargestellten Ausgestaltung der Entsorgungsvorrichtung 10 ist der Ölseparator 17 außerhalb des Kessels 13 angeordnet, es ist aber auch denkbar, ebenfalls den Ölseparator 17 in den Kessel 13 zu integrieren. Der Ölabscheideausgang 29 des Ölseparators 17 ist mit dem Ölsammelbehälter 16 über eine Leitung 30 verbunden, so daß das im Ölseparator 17 abgeschiedene Öl unmittelbar im Ölsammelbehälter 16 gesammelt werden kann. Der Ölseparator 17 weist ebenfalls einen Ausgang 25 zum Austritt des abgeschiedenen Wassers 15 auf, das entweder Wasser mit einem geringeren Reinheitsgrad ist und über eine Leitung 31 in den Sammelbehälter 14 führbar ist, oder aber direkt über Leitungen 24 zu einem Auslaß 32 führbar ist, was im einzelnen noch weiter unten beschrieben wird. In die Leitungen 24 ist eine Analyseeinrichtung 23 geschaltet, die mit hier nicht dargestellten Stellgliedern gekoppelt ist, so daß in Abhängigkeit von mittels der Analyseeinrichtung 23 erkannten Restölanteilen im Wasser 15, beispielsweise in Form von Emulsionen, das aus dem Ölseparator 17 austretende Wasser 15 direkt auf den Auslaß 32 gebbar ist oder aber veranlaßt wird, daß das Wasser 15 zunächst im Sammelbehälter 14 gesammelt wird.

Es ist aber auch eine denkbare Ausgestaltung der Vorrichtung 10 möglich, bei der die Leitungen 24 insgesamt nur dünne Meßleitungen zur Förderung geringer Flüssigkeitsmengen zur Analyseeinrichtung 23 sind. Bei dieser vorbeschriebenen Ausgestaltung der Vorrichtung 10 wird das aus dem Ölseparator 17 über den Ausgang 25 austretende Wasser 15 in den Sammelbehälter 24 gefördert und ggf. über den dortigen Abfluß 37 abgelassen, wenn der von der Analyseeinreichtung 23 erkannte Reinheitsgrad oberhalb eines vorgegebenen Grenzwertes liegt.

Der Sammelbehälter 14 ist über eine Leitung 33 mit dem Eingang einer Membrantrenneinrichtung 19 verbunden, wobei der Retentatausgang (Konzentratausgang) über eine Leitung 34 wiederum mit dem Innenraum des Sammelbehälters 14 verbunden ist. Über die Leitung 34 wird das von der Membrantrenneinrichtung 19 erzeugte Retentat 21 in den Sammelbehälter 14 zurückbefördert. Der Permeatausgang der Membrantrenneinrichtung 19 ist über eine Leitung 35 mit einer Ventileinrichtung 27 verbunden, in die auch die oben beschriebene Leitung 24 mündet, die der Wasseranalyse und/oder der Wasserförderung dienen kann.

Die Ventileinrichtung 27 ist über eine Leitung 35 mit dem Reinwasserbehälter verbunden. Desweiteren ist an die Ventileinrichtung 27 eine Leitung 36 angeschlossen, die mit dem Auslaß 32 der Entsorgungsvorrichtung 10 zum Austritt des von der Membrantrenneinrichtung 19 kommenden Permeats bzw. des vom Ausgang 25 des Ölseparators 17 kommenden Wassers 15 verbunden ist.

Die Entsorgungsvorrichtung 10 wirkt auf nachfolgend beschriebene Weise bezüglich ihrer einzelnen Komponenten derart zusammen, daß zunächst das zu reinigende Schmutzwasser 11 in den Ölseparator 17 geführt wird. Der Ölseparator 17 arbeitet auf an sich bekannte Weise und kann beispielsweise als sogenannter Koalisierplattenseparator ausgebildet sein. Über verschiedene Filtersysteme, über die das Schmutzwasser 11 vor Eintritt in den Ölseparator 17 geführt wird und die hier im einzelnen nicht dargestellt sind, werden beispielsweise Feststoffanteile oder sonstige grobe Verunreinigungen aus dem Schmutzwasser 11 entfernt, bevor es in den Ölseparator 17 eintritt. Auf bekannte Weise wird dann im Ölseparator 17 Öl 18 abgeschieden und über den Ausgang 29 und über die Leitung 30 in den Ölsammelbehälter 16 gefördert. Über den weiteren Ausgang 25 des Ölseparators 17 wird über die Leitung 31 das Wasser 15 in den Sammelbehälter gefördert, wobei über die Leitungen 24 mittels der Analyseeinrichtung 23 erkannt wird, ob im aus dem Ölseparator 17 kommenden Wasser 15 ein in seiner Höhe vorbestimmbarer Restölanteil enthalten ist oder nicht. Liegt der Restölanteil unterhalb eines vorgegebenen Wertes, wird das Wasser 15 durch den Behälter 14 über den Ausgang 37 abgelassen oder bei der oben schon erwähnten anderen Ausgestaltung der Vorrichtung 10 über die Leitung 24 direkt über die Ventileinrichtung 27 auf den Auslaß geführt oder aber über die Ventileinrichtung 27 über die Leitung 35 in den Reinwasserbehälter 26, d.h. das aus dem Ölseparator 17 austretende Wasser kann den Reinheitsgrad von Reinwasser haben und als solches genutzt werden.

Wenn die Analyseeinrichtung 23 erkennt, daß das aus dem Ölseparator 17 austretende Wasser 15 einen oberhalb eines vorstimmbaren Wertes liegenden Restölanteil enthält, wird über die mit der Analyseeinrichtung 23 verbundenen, hier nicht dargestellten Stellglieder das aus dem Ölseparator 17 austretende Wasser ausschließlich in den Sammelbehälter gefördert und über eine Leitung 33 wird das Wasser 15, das somit einen geringeren Reinheitsgrad als zulässig hat, auf die Membrantrenneinrichtung 19 geführt, wobei das Retentat 21 über die Leitung 34 in die Sammelbehälter 14 zurückgeführt wird.

Dieses kann fortlaufend in einem Kreisprozeß mittels hier nicht gesondert dargestellter Pumpen kontinuierlich erfolgen. Das aus der Membrantrenneinrichtung 19 über eine Leitung 35 austretende Permeat 20 wird über die Ventileinrichtung 27 entweder direkt auf den Auslaß 32 gegeben oder aber über die Leitung 35 in den Reinwasserbehälter 26.

Die Steuerung der Ventileinrichtung 27 in Verbindung mit der Analyseeinrichtung 23 und der damit verbundenen, hier nicht dargestellten Stelleinrichtung zur Steuerung des Flusses des Wassers 15 sowie des Permeats 20 zum Auslaß 32 bzw. in den Reinwasserbehälter 26 kann automatisch, gegebenenfalls auch rechnerunterstützt, erfolgen.

Es sei noch darauf hingewiesen, daß die in der Figur dargestellte Ausgestaltung der Entsorgungsvorrichtung 10 noch dahingehend modifiziert werden kann, daß die Leitung 34 für das Retentat 21 nicht in den Sammelbehälter geführt wird, sondern direkt in den Ölsammelbehälter, wenn ein sehr hoher Ölanteil im Retentat 21 zu erwarten ist, wobei es auch denkbar ist, die Leitung 34 umschaltbar in bezug auf ihren Eintritt entweder in den Sammelbehälter 14 oder in den Ölsammelbehälter 16 auszubilden.

### Bezugszeichenliste

- 10: Entsorgungsvorrichtung
- 11: Schmutzwasser
- 12:
- 13: Kessel
- 14: Sammelbehälter
- 15: Wasser mit geringerem Reinheitsgrad
- 16: Ölsammelbehälter
- 17: Ölseparator
- 18: Öl
- 19: Membrantrenneinrichtung
- 20: Permeat/Reinwasser
- 21: Retentat
- 22: Behälter
- 23: Analyseeinrichtung
- 24: Leitung
- 25: Ölseparatorausgang
- 26: Reinwasserbehälter
- 27: Ventileinrichtung
- 28: Trennwand
- 29: Ölabscheideausgang
- 30: Leitung
- 31: Leitung
- 32: Auslaß
- 33: Leitung
- 34: Leitung
- 35: Leitung
- 36: Leitung
- 37: Auslaß

## Patentansprüche

1. Entsorgungsvorrichtung zur Abscheidung von Öl aus Schmutzwasser, umfassend wenigstens einen Sammelbehälter für aus dem Schmutzwasser erzeugtes Wasser mit einem geringeren Reinheitsgrad, sowie einen Ölsammelbehälter, in dem das aus dem Schmutzwasser in einem Ölseperator anfallende Öl gesammelt wird, dadurch gekennzeichnet, daß das im Sammelbehälter (14) befindliche Wasser (15) mit geringerem Reinheitsgrad bei Überschreitung eines vorbestimmbaren Restölanteils über eine Membrantrenneinrichtung (19) führbar ist, wobei das die Membrantrenneinrichtung (19) verlassende Permeat (20) als Reinwasser sammelbar und/oder abführbar ist, wohingegen das die Membrantrenneinheit (19) verlassende Retentat (21) in einen Behälter (22) rückführbar ist.

2. Entsorgungsvorrichtung nach Anspruch 1, dadurch gekennzeichnet, daß der Behälter (22) der Sammelbehälter (14) für das Wasser (15) mit einem geringeren Reinheitsgrad ist.

3. Entsorgungsvorrichtung nach einem oder beiden Ansprüche 1 oder 2, dadurch gekennzeichnet, daß der Behälter (22) der Ölsammelbehälter (16) ist.

4. Vorrichtung nach einem oder mehreren der Ansprüche 1 bis 3, dadurch gekennzeichnet, daß der Restölanteil des im Sammelbehälter (14) befindlichen Wassers (15) mit geringerem Reinheitsgrad mittels einer Analyseeinrichtung (23) bestimmbar ist.

5. Entsorgungsvorrichtung nach einem oder mehreren der Ansprüche 1 bis 4, dadurch gekennzeichnet, daß das die Membrantrenneinrichtung (19) verlassende Permeat (20) in einem Reinwasserbehälter (26) sammelbar ist. 1

6. Entsorgungseinrichtung nach einem oder mehreren der Ansprüche 1 bis 5, dadurch gekennzeichnet, daß wenigstens der Sammelbehälter (14) und/oder der Ölsammelbehälter (16) in einem gemeinsamen Kessel (13) angeordnet sind.

7. Entsorgungsvorrichtung nach Anspruch 6, dadurch gekennzeichnet, daß der Reinwasserbehälter (26) im Kessel (13) angeordnet ist.

8. Entsorgungsvorrichtung nach einem oder mehreren der Ansprüche 1 bis 7, dadurch gekennzeichnet, daß diese mobil ausgebildet ist.
